# EUROPÄISCHE PATENTANMELDUNG

(11) **EP 3 299 691 A1**
(43) Veröffentlichungstag der Anmeldung: **28.03.2018**
(21) Anmeldenummer: 16189973.7
(22) Anmeldetag: 21.09.2016
(51) Int. Cl.: F16N 7/38, F16N 29/02

(54) **SCHMIERSTOFFVERTEILSYSTEM**

(71) Anmelder: Baier & Köppel GmbH & Co. KG, 91257 Pegnitz (DE)
(72) Erfinder: Köppel, Bernhard, Pegnitz 91257 (DE); Hess, Stefan, 90491 Nürnberg (DE)
(74) Vertreter: Zech, Stefan Markus

(57) **Zusammenfassung**

Die Erfindung betrifft ein Schmierstoffverteilsystem (12) zum Verteilen von Schmierstoff auf eine Vielzahl von Schmierstellen, umfassend eine Vielzahl von Schmierstofffördereinheiten (11, 25) und eine Vielzahl von Endleitungen (13), die die Schmierstofffördereinheiten (11, 25) mit den Schmierstellen (12) verbinden, eine zentrale Schmierstofffördereinrichtung (10) und eine Vielzahl von Zwischenförderleitungen (16), die die zentrale Schmierstofffördereinrichtung (10) mit der Vielzahl von Schmierstofffördereinheiten (11, 25) verbinden, wobei die Schmierstofffördereinheiten (11, 25) jeweils einen Dateneingang aufweisen, zur Aufnahme von Daten über eine gewünschte Schmierstofffördermenge an die jeweilige angeschlossene Schmierstelle oder die jeweiligen angeschlossenen Schmierstellen (12), wobei das Schmierstoffverteilsystem so konfiguriert ist, dass es entsprechend der Daten eine Schmierstoffabgabe an die jeweilige angeschlossene Schmierstelle oder die jeweiligen angeschlossenen Schmierstellen bewirkt.

## Beschreibung

Die Erfindung betrifft ein Schmierstoffverteilsystem zum Verteilen von Schmierstoff auf eine Vielzahl von Schmierstellen nach Anspruch 1 sowie ein entsprechendes Schmierstoffverteilverfahren.

Zur Verteilung von Schmierstoff auf mehrere Schmierstellen ist es bekannt, beispielsweise eine zentrale Schmierstoffpumpe vorzusehen und den von dieser Schmierstoffpumpe geförderten Schmierstoff über einen oder mehrere Schmierstoffverteiler auf die Schmierstellen zu verteilen. Die Menge an Schmierstoff, die letztlich an der Schmierstelle ankommt, ergibt sich aus einem komplexen Wechselspiel von Einstellungen, beispielsweise hinsichtlich der Fördermenge der Pumpe oder der Ausgestaltung und Einstellung von Verteilern. Durch die Komplexität der Einstellung der Schmierung kann diese üblicherweise nur von Fachpersonal durchgeführt werden und ist nicht oder nur äußerst eingeschränkt endkundentauglich.

Es ist daher Aufgabe der Erfindung, ein Schmierstoffverteilsystem sowie ein Schmierstoffverteilverfahren vorzuschlagen, das auf einfache Art und Weise eine Einstellung der Schmierung der mehreren Schmierstellen ermöglicht und insbesondere auch eine Einstellung durch den Endkunden (der nicht unbedingt ein Experte für die Auslegung und Einstellung derartiger Systeme bzw. Verfahren sein soll) ermöglicht. Insbesondere soll auch eine nachträgliche Veränderung auf einfache Art und Weise (ohne großen Aufwand) ermöglicht werden.

Diese Aufgabe wird durch die Merkmale des Anspruchs 1 gelöst.

Insbesondere wird die Aufgabe gelöst durch ein Schmierstoffverteilsystem zum Verteilen von Schmierstoff auf eine Vielzahl von Schmierstellen, umfassend eine Vielzahl von Schmierstofffördereinheiten und eine Vielzahl von Endleitungen, die die Schmierstofffördereinheiten mit den Schmierstellen verbinden, eine zentrale Schmierstofffördereinrichtung und eine Vielzahl von Zwischenförderleitungen, die die zentrale Fördereinrichtung mit der Vielzahl von Schmierstofffördereinheiten verbindet, wobei die Schmierstofffördereinheiten jeweils einen Dateneingang aufweisen, zur Aufnahme von Daten über eine gewünschte Schmierstofffördermenge an die jeweilige angeschlossene Schmierstelle oder die jeweiligen angeschlossenen Schmierstellen, wobei das Schmierstoffverteilsystem so konfiguriert ist, dass es entsprechend der Daten eine Schmierstoffabgabe an die jeweilige angeschlossene Schmierstelle oder die jeweiligen angeschlossenen Schmierstellen bewirkt.

Ein Kerngedanke der Erfindung liegt darin, dass die Schmierstoffabgabe an die jeweilige Schmierstelle über die Übermittlung von entsprechenden Daten an die (dezentralen) Schmierstofffördereinheiten erfolgt. Im Stand der Technik müssen die Abgabemengen hingegen (in der Regel für das ganze System) im Vorfeld definiert sein. Letztlich ist das vorgeschlagene Schmierstoffverteilsystem in gewissem Sinne gerade konträr zum bekannten Ansatz des Verteilens von Schmierstoff. Bisher wurde die Schmierstoffabgabe üblicherweise so eingestellt, dass "vom Kopf her", d.h. einer zentralen Pumpe bzw. einem zentralen Verteiler die wesentliche Einstellung durchgeführt wurde bzw. sukzessive ausgehend von diesem "Kopf" die Verzweigungen abgearbeitet wurden, beispielsweise durch Einstellung von Progressiv-Verteilern. Vorliegend wird jedoch gerade am anderen Ende des Schmierstoffverteilsystems angesetzt, nämlich an den Schmierstofffördereinheiten, von denen letztlich (über die Endleitungen) die Schmierstellen gespeist und ggf. überwacht werden. Dort ist es möglich, dass Daten über die gewünschte Schmierstofffördermenge aufgenommen werden, so dass eine Einstellung der Fördermenge (insbesondere auch vom Endnutzer) einfach durchgeführt werden kann. Insbesondere ist dadurch auch eine schnelle und unkomplizerte Nachjustierung ermöglicht. Vorzugsweise kann eine Schmierstoffmengenmesseinrichtung an den Schmierstellen oder mehreren der Schmierstellen oder allen Schmierstellen vorgesehen sein. Die Schmierstoffmenge kann insbesondere an einer oder an mehreren der Schmierstellen oder allen Schmierstellen gemessen werden. In einer bevorzugten Ausführungsform kann ein selbstadaptierendes Schmiersystem ausgebildet sein. Zur Aufnahme der Daten können die Schmierstofffördereinheiten eine entsprechende (elektronische) Schmierstofffördereinheit-Steuereinrichtung aufweisen. Insgesamt wird es ermöglicht, dass Abgabemengen nicht im Vorfeld definiert werden müssen (wie beispielsweise bei Progressivsystemen). Der (End-) Kunde muss nicht selber lange recherchieren, auf welcher Art und Weise er das Schmierstoffverteilsystem einstellen muss, um letztlich eine bestimmte Schmierstoffabgabe am gewünschten Ort zu bewirken. Es ist nicht notwendig, dass jede nachträgliche Änderung oder Auswirkung auch im Vorfeld berücksichtigt (und durchgerechnet bzw. durch einen Umbau umgesetzt) wird. Bei einer gewünschten Änderung der Schmierstoffabgabe ist kein Zerlegen eines Verteilers (mit entsprechendem Risiko einer Verwechslung bzw. Kontamination und einem erheblichen Aufwand) nötig, wie das vor allem bei Progressivsystemen der Fall ist. Weiterhin ist kein Austausch von Teilen unbedingt nötig. Zuletzt wird auch eine schnelle und unkomplizierte Nachjustierung, bezogen auf die einzelne Schmierstelle, ermöglicht. Die Überwachung der Schmierung der Schmierstellen ist wenig aufwändig oder sogar ggf. entbehrlich.

Die Schmierstofffördereinheiten weisen vorzugsweise jeweils einen Datenausgang auf, über den die benötigte Schmierstoffmenge an einen Dateneingang der zentralen Schmierstofffördereinrichtung und/oder einer entsprechenden Steuereinrichtung übermittelt werden kann. Ein Datenaustausch kann drahtlos oder drahtgebunden erfolgen. Generell können Daten zwischen Schmierstofffördereinheiten und zentraler Schmierstofffördereinrichtung bidirektional ausgetauscht werden. Es ist jedoch auch ggf. ausreichend (bzw. bei gewissen Anwendungen sogar vorteilhaft), wenn dies nur uni-direktional (von der Schmierstofffördereinheit zur Schmierstofffördereinrichtung) erfolgt. Die zentrale Schmierstofffördereinrichtung kann ebenfalls (zur Datenaufnahme und ggf. Datenausgabe) eine elektronische Schmierstofffördereinrichtungs-Steuereinrichtung aufweisen. Durch eine Datenübergabe von Schmierstofffördereinheit zu Schmierstofffördereinrichtung hinsichtlich der Schmierstoffmenge kann einfach und effektiv die vom Kunden gewünschte Schmierstoffmenge zur Schmierstoffstelle gefördert werden.

Mindestens eine oder mehrere oder alle Schmierstofffördereinheiten können als Schmierstoffverteiler (beispielsweise als Sektionalventil bzw. Sektionalverteiler) ausgebildet sein. Der jeweilige Schmierstoffverteiler kann mindestens zwei oder mindestens drei oder mindestens vier, beispielsweise acht (oder mehr) Ausgänge aufweisen. Über die Ausgänge kann dann (über die Endleitungen) die jeweilige Schmierstelle mit Schmierstoff versorgt werden. Generell ist es bevorzugt, wenn der Schmierstoffverteiler so ausgebildet ist, dass die Zeitdauer für eine Öffnung eines Ausgangs variiert (gesteuert) werden kann, wobei unter einer Variation (Steuerung) die Möglichkeit der Einstellung von mehr als nur einem Wert größer Null, insbesondere mindestens fünf verschiedenen Werten größer Null verstanden werden soll. Insbesondere ist der Schmierstoffverteiler so ausgebildet, dass (insbesondere innerhalb eines Zyklus) die Zeitdauer der Schmierstoffausgabe durch einen ersten Ausgang anders (beispielsweise größer oder kleiner) sein kann als durch einen zweiten (oder dritten etc.) Ausgang. Der Schmierstoffverteiler kann ggf. hydraulisch oder elektrisch gesteuert werden. In jedem Fall wird eine einfache und effektive Förderung an die Schmierstellen ermöglicht. Einzelne Schmierstellen können auch "ausgelassen" werden, also ggf. nicht hinsichtlich der Schmierstoffabgabe steuerbar sein. Es kann also auch vorgesehen sein, dass bei einer konventionellen Schmieranlage die Anzahl von Ausgängen nicht vollständig genutzt wird.

Die zentrale Schmierstoffförderung umfasst vorzugsweise eine Förderpumpe zum Fördern des Schmierstoffes und/oder einen Schmierstoffverteiler (Master-Verteiler). Dieser Schmierstoffverteiler kann an die Schmierstoffpumpe angeschlossen sein oder in diese integriert sein (also ggf. eine bauliche Einheit mit der Schmierstoffpumpe ausbilden). Es ist auch denkbar, dass die Schmierstoffpumpe mehrere Ausgänge aufweist, also gewissermaßen einen Schmierstoffverteiler mit-ausbildet. Die Schmierstoffpumpe kann auch eine Vielzahl von Pumpeneinheiten aufweisen, die jeweils für sich Schmierstoff aus einem zugeordneten Ausgang austreiben. Grundsätzlich kann der Schmierstoffverteiler (Master-Verteiler) der Schmierstofffördereinrichtung ausgebildet sein, wie der Schmierstoffverteiler einer der Schmierstofffördereinheiten (wie im vorherigen Absatz beschrieben). Insgesamt wird die Förderung und Verteilung des Schmierstoffs damit vereinfacht.

Mindestens eine der Schmierstofffördereinheiten, vorzugsweise mehrere der Schmierstofffördereinheiten, insbesondere alle Schmierstofffördereinheiten können als Slave-Verteiler ausgebildet sein. Diese Slave-Verteiler sind vorzugsweise an den Master-Verteiler, der der zentralen Schmierstofffördereinrichtung zugeordnet ist, angeschlossen. Die Slave-Verteiler können mehrere Schmierstoffausgänge zum Anschluss an entsprechende Schmierstellen sowie einen Dateneingang zur Aufnahme von Daten über eine gewünschte Schmierstofffördermenge an die jeweilige angeschlossene Schmierstelle aufweisen. Ein Kerngedanke dieser Weiterbildung liegt darin, dass ein wesentlicher Anteil der "Intelligenz" des Systems in den Slave-Verteilern mit ihrem Dateneingang (und ggf. einer entsprechenden Steuereinrichtung) vorgesehen ist. Dadurch wird es dem Benutzer ermöglicht, auf intuitiv einfache Art und Weise genau den Verteiler einzustellen, der im Hinblick auf das System in unmittelbarer Nähe der zu schmierenden Schmierstelle ist. Das System passt sich insbesondere automatisch an veränderte Gegebenheiten an.

Der Master-Verteiler kann einen Datenausgang (und ebenfalls eine entsprechende Steuereinrichtung) aufweisen, über den die von dem Master-Verteiler benötigte Schmierstoffmenge an einen Dateneingang der Förderpumpe (die ebenfalls grundsätzlich eine Steuereinrichtung aufweisen kann) übermittelt werden kann. Grundsätzlich ist es also möglich, dass der Informations- bzw. Datenfluss vom Slave-Verteiler über den Master-Verteiler zur Förderpumpe fließt, wohingegen der Schmierstoff die genau entgegengesetzte Richtung aufweist (von der Förderpumpe über den Master-Verteiler zum Slave-Verteiler und letztlich der Schmierstoffstelle). Dabei wurde erkannt, dass durch dieses Aufbrechen einer Gleichschaltung von Informations- und Schmierstofffluss ein besonders einfaches und intuitiv bedienbares System bereitgestellt werden kann.

Mindestens einer der Slave-Verteiler, vorzugsweise mehrere Slave-Verteiler, insbesondere alle Slave-Verteiler können so konfiguriert sein, dass (bei vorgegebenem Volumenstrom der zentralen Förderpumpe) eine Förderzeit für jede Schmierstelle bestimmt werden kann. Unter Volumenstrom" ist das von der Förderpumpe geförderte Schmierstoffvolumen pro Zeiteinheit zu verstehen. Dieser Volumenstrom kann in dem jeweiligen Slave-Verteiler bereits hinterlegt sein (auf einem entsprechenden Speicher) oder zur Justierung des Systems vorgegeben und ggf. variiert werden. Anstelle des Volumenstroms kann im Allgemeinen (insbesondere bei bekannter Dichte) auch der Massenstrom als Parameter verwendet werden. Der jeweilige Slave-Verteiler kann weiterhin so konfiguriert sein, dass er eine Summe der benötigten Förderzeiten der an den jeweiligen Slave-Verteiler angeschlossenen Schmierstellen an den Master-Verteiler übermittelt. Der Master-Verteiler ist vorzugsweise so konfiguriert, dass er eine Summe der von den Slave-Verteilern übermittelten aufsummierten Förderzeiten an die Förderpumpe übermittelt. Insgesamt wird der Förderpumpe also eine Information dahingehend übermittelt, dass sie Schmierstoff für eine bestimmte Zeit (die der Master-Verteiler unmittelbar bzw. die Slave-Verteiler mittelbar vorgeben) fördert. Der Förderpumpe muss dabei nicht (zwingend) bekannt sein, was mit dem geförderten Schmierstoff daraufhin "passiert". Genauso wenig muss der Master-Verteiler "wissen", was mit dem Schmierstoff, der an die Slave-Verteiler gefördert wird, "passiert". Letztlich zeigt dies die Einfachheit des Systems. Obwohl es hinsichtlich der Förderpumpe und des Master-Verteilers ausreicht, dass diese Bauteile nur Informationen erhalten, über welchen Zeitraum gefördert werden soll (bzw. hinsichtlich des Master-Verteilers noch zu welchem Slave-Verteiler gefördert werden soll), wird eine präzise und einfach einzustellende Schmierung der Schmierstellen realisiert. Der Volumenstrom (das Fördervolumen pro Zeit) der Förderpumpe ist vorzugsweise (zumindest über einen Zyklus) konstant (kann jedoch auch variieren). Weiterhin ist es denkbar, dass der Volumenstrom der Förderpumpe über entsprechende Datenverbindungen (drahtgebunden oder drahtlos) an Master-Verteiler und/oder Slave-Verteiler übermittelt wird, so dass dort bei der Bestimmung der Förderzeit ein ggf. variierender Volumenstrom berücksichtigt werden kann. Insgesamt könnte damit die Schmierung der Schmierstellen wie folgt eingestellt werden. Zunächst kann eine Definition einer Öffnungszeit pro Schmierstelle definiert werden. Dies kann am Slave-Verteiler (durch den Nutzer) erfolgen. Die Abgabemenge (also das absolute Volumen, das letztlich an der Schmierstelle ankommt) ergibt sich aus dem Produkt von dem (bekannten) Volumenstrom der Förderpumpe und der Öffnungszeit des entsprechenden Ausgangs am Slave-Verteiler. Weiterhin kann dann eine Rückmeldung aller Öffnungszeiten der jeweiligen Ausgänge des Slave-Verteilers (in Summe) an den Master-Verteiler erfolgen. Die Öffnungszeit des Master-Verteilers entspricht dann wiederum der Summe der Öffnungszeiten der Slave-Verteiler. Diese Summe (= Öffnungszeit des Master-Verteilers) kann dann der Förderpumpe übermittelt werden und entspricht (im einfachsten Fall) dann exakt der Pumpenlaufzeit. Insgesamt kann also die Summe der Öffnungszeiten aller Slave-Verteiler die Pumpenlaufzeit regeln (bzw. im einfachsten Fall der Pumpenlaufzeit entsprechen).

An einer oder mehreren der Schmierstellen oder allen Schmierstellen kann eine Volumenmesseinrichtung vorgesehen sein. Dadurch kann insbesondere eine Kompensation, vorzugsweise Temperaturkompensation, erfolgen.

Vorzugsweise nimmt jeder Verteiler (also sowohl Master-Verteiler als auch die Slave-Verteiler) für jeden Schmierzyklus eine vorbestimmte Ausgangsposition ein, die immer wieder (zu jedem Zyklusanfang) eingenommen wird. Dadurch wird eine Steuerung der Schmierstoffabgabe weiter vereinfacht.

In alternativen Ausführungsformen kann/können mindestens eine der Schmierstofffördereinheiten, insbesondere mehrere Schmierstofffördereinheiten, vorzugsweise alle Schmierstofffördereinheiten als dezentrale Förderpumpe(n) (beispielsweise Druckerhöhungspumpe oder "Booster-Pumpe") ausgebildet sein. Derartige (dezentrale) Förderpumpen werden dann grundsätzlich durch die zentrale Schmierstofffördereinrichtung mit Schmierstoff versorgt, ermöglichen es jedoch (vorzugsweise) die tatsächliche Schmierstoffabgabe an die Schmierstelle dezentral einzustellen. Beispielsweise können die dezentralen Förderpumpen so ausgestaltet sein, dass sie (ggf. zyklisch) durch die zentrale Fördereinrichtung befüllt werden und dann selbstständig die gewünschte Schmierstoffmenge (wie vom Nutzer vorgegeben) an die jeweilige Schmierstelle ausgeben. Im vorliegenden Fall kann die zentrale Schmierstofffördereinrichtung selbst eine Förderpumpe und/oder einen Schmierstoffverteiler aufweisen. Insgesamt wird auf äußerst einfache Art und Weise eine Einstellung der Schmierstoffausgabe an die jeweilige Schmierstelle durch den Nutzer ermöglicht.

Generell können zum Austausch von Daten und der notwendigen Bestimmung von Parametern (beispielsweise Öffnungszeit eines Verteilerausgangs) entsprechende Steuereinrichtungen in den jeweiligen Elementen/Einheiten (insbesondere den jeweiligen Förderpumpen und/oder Verteilern) vorgesehen sein. Es ist generell auch denkbar, dass zumindest ein Teil der für die Steuerung oder Regelung notwendigen Bestimmungen und Berechnungen ausgelagert (beispielsweise an einem zentralen Ort, wie insbesondere dem Ort der zentralen Schmierstofffördereinrichtung) erfolgt. Entscheidend ist jedoch, dass die einzelnen Schmierstofffördereinheiten, die letztlich (unmittelbar) mit den Schmierstellen über die Endleitung in Kontakt stehen, eine Eingabemöglichkeit für einen Dateneingang aufweisen, um die Benutzung und Einstellung des Systems zu vereinfachen.

Weiterhin kann eine Temperaturkompensation und/oder Druckkompensation ermöglicht sein bzw. durchgeführt werden.

Vorzugsweise umfasst das Schmierstoffverteilsystem mindestens eine (insbesondere mobile) Eingabeeinheit zur Eingabe von Parametern betreffend die Schmierstoffförderung. Insbesondere kann die Eingabeeinheit zur Eingabe der gewünschten Schmierstoffmenge für jede Schmierstelle konfiguriert sein. Bei der Eingabeeinheit handelt es sich insbesondere um ein mobiles Endgerät wie beispielsweise ein Smartphone. Die Eingabeeinheit kann eine Anzeigeeinrichtung, insbesondere Display, und/oder eine Steuereinheit (wie beispielsweise ein Mikroprozessor) und/oder Schalter/Taster, insbesondere eine Tastatur, aufweisen. Im Allgemeinen können sämtliche Steuereinrichtungen des Schmierstoffverteilsystems einen Mikroprozessor und/oder mindestens ein (elektronisches) Speichermittel wie einen Speicherchip, aufweisen.

Die Eingabeeinheit kommuniziert vorzugsweise drahtlos oder drahtgebunden mit mindestens einer (oder mehreren, vorzugsweise allen) Schmierstofffördereinheiten. Alternativ oder zusätzlich weist mindestens eine, vorzugsweise mehrere, insbesondere alle Schmierstofffördereinheiten eine integrierte Eingabeeinheit auf. In bevorzugten Ausführungsformen ist die Eingabeeinheit so konfiguriert, dass eine Fördermenge der Pumpe und/oder eine Betriebsbedingung, wie beispielsweise eine Temperatur oder ein Temperaturbereich, eingegeben werden kann. Beispielsweise kann vorgesehen sein, dass über die Eingabeeinheit ein bestimmter Temperaturbereich (beispielsweise kalt, normal oder warm) vorgegeben werden kann, so dass ggf. ein temperaturabhängiger Aufschlag (Zeitaufschlag und/oder Mengenaufschlag) erfolgen kann. Für eine Temperatur zwischen 5 °C und 0 °C kann beispielsweise ein Zeitaufschlag von 10 % erfolgen. Für eine Temperatur zwischen 0 °C und -10 °C kann ein Zeitaufschlag von 15 % erfolgen. Für eine Temperatur von -10 °C bis -20 °C kann ein Zeitaufschlag von 25 % erfolgen. Die Einstellung der Schmierstoffabgabe ist dadurch besonders präzise.

Die oben genannte Aufgabe wird unabhängig gelöst durch ein Schmierstoffverteilverfahren zum Verteilen von Schmierstoff auf eine Vielzahl von Schmierstellen, insbesondere unter Verwendung des Schmierstoffverteilsystems der oben beschriebenen Art, wobei eine zentrale Schmierstofffördereinrichtung Schmierstoff an eine Vielzahl von Schmierstofffördereinheiten fördert, wobei jede Schmierstofffördereinheit über mindestens eine Endleitung Schmierstoff an mindestens eine Schmierstelle fördert, wobei eine jeweils gewünschte Schmierstoffmenge in eine Eingabeeinheit eingegeben wird, wobei die Eingabeeinheit in Verbindung mit der jeweiligen Schmierstofffördereinheit steht oder in diese integriert ist, wobei Schmierstoff entsprechend der vorgegebenen Schmierstoffmenge an die jeweilige Schmierstelle ausgegeben wird. Optional kann die benötigte Schmierstoffmenge von den Schmierstofffördereinheiten an die zentrale Schmierstofffördereinrichtung übermittelt werden (insbesondere eine Förderzeit).

Mindestens eine Schmierstofffördereinheit, insbesondere alle Schmierstofffördereinheiten (oder zumindest mehrere Schmierstofffördereinheiten) sind als Schmierstoffverteiler, insbesondere Slave-Verteiler ausgebildet. Alternativ oder zusätzlich kann mindestens eine Schmierstofffördereinheit, insbesondere mehrere oder alle Schmierstofffördereinheiten als eine dezentrale Förderpumpe ausgebildet sein. Die zentrale Schmierstofffördereinrichtung kann eine Förderpumpe und/oder einen Verteiler, insbesondere einen Master-Verteiler umfassen.

Mindestens einer der Schmierstoffverteiler (Slave-Verteiler), vorzugsweise mehrere oder alle Schmierstoffverteiler (Slave-Verteiler), der/die der Schmierstofffördereinheit entsprechen, kann (bei vorgegebenem Volumenstrom der zentralen Schmierstofffördereinrichtung, insbesondere Förderpumpe) eine Förderzeit für jede Schmierstelle bestimmen. Eine Summe der Förderzeiten der an den jeweiligen Schmierstoffverteiler (Slave-Verteiler), der die Schmierstofffördereinheit bildet, angeschlossenen Schmierstellen kann an die Schmierstofffördereinrichtung, insbesondere den Master-Verteiler übermittelt werden. Der Master-Verteiler übermittelt vorzugsweise eine Summe der von den Slave-Verteilern übermittelten aufsummierte Förderzeiten an die Förderpumpe.

In die Eingabeeinheit kann ein Volumenstrom der Pumpe und/oder eine Betriebsbedingung, wie beispielsweise eine Temperatur oder ein Temperaturbereich eingegeben werden.

Eine Verbindung zwischen Eingabeeinheit und jeweiliger Schmierstofffördereinheit oder einer sonstigen Komponente (wie beispielsweise dem Master-Verteiler oder der Förderpumpe) kann drahtlos (insbesondere über Infrarot oder Bluetooth) oder auch drahtgebunden und/oder über das Internet (oder ein sonstiges Netzwerk) erfolgen.

Insgesamt ergibt sich ein deutlich vereinfachtes und kundenfreundliches Verfahren, das es auch Nicht-Experten ermöglicht, die Schmierstoffabgabe einzustellen. Vorzugsweise wird auch ein selbstadaptierendes System bereitgestellt, das die Benutzerfreundlichkeit weiter verbessert. Insbesondere ist eine einfache "Plug & Play"-Lösung bereitgestellt. Weiterhin kann das System bzw. Verfahren ggf. über eine Smartphone-App eingestellt werden. Der Nutzer muss (nur noch) die benötigte Schmierstoffmenge für die jeweilige Schmierstelle einstellen. Alles andere wird (beispielsweise durch die Master-Slave-Struktur) selber justiert. Insgesamt sind keine besonderen (Fach-) Kenntnisse erforderlich. Eine Nachjustierung ist äußerst einfach. Bei jeder Veränderung kann sich das System (ggf.) selber anpassen. Es sind keine (wesentlichen) Druckverluste durch das Anlaufen von Verteilern zu erwarten. Gegebenenfalls ist eine vollständige Entspannung des Schmierstoffdruckes in einer Hauptleitung durch offene Leitungen in Richtung zur Schmierstelle realisiert.

Es können mindestens zwei oder mindestens drei oder mindestens fünf Schmierstofffördereinheiten vorgesehen sein. Gegebenenfalls vorgesehene Schmierstoffverteiler können die Schmierstellen mit-ausbilden. Insbesondere können ggf. vorgesehene Schmierstoffverteiler in einer baulichen Einheit mit den Schmierstellen ausgeführt sein (beispielsweise als ein in die Kupplungsplatte eines Zugfahrzeugs integrierter Schmierstoffverteiler). Besonders bevorzugt kann die Einstellung der Schmierstoffmenge (pro Schmierstelle) drahtlos erfolgen.

Weitere Ausführungsformen ergeben sich aus den Unteransprüchen.

Nachfolgend wird die Erfindung anhand von Ausführungsbeispielen beschrieben, die anhand der Abbildungen näher erläutert werden. Hierbei zeigen:
- Fig. 1: eine schematische Ansicht eines Schmierstoffsystems;
- Fig. 2-8: ein Smartphone mit verschiedenen Bildschirmansichten; und
- Fig. 9: eine alternative Ausführungsform eines Schmierstoffverteilsystems.

In der nachfolgenden Beschreibung werden für gleiche und gleichwirkende Teile dieselben Bezugsziffern verwendet.

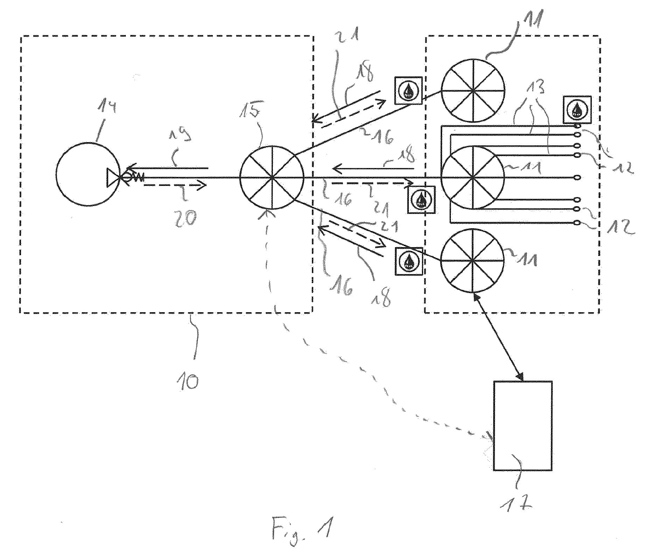

Fig. 1 zeigt in schematischer Ansicht ein erfindungsgemäßes Schmierstoffverteilsystem mit einer Schmierstofffördereinrichtung 10 und einer Vielzahl (konkret drei, es kann jedoch auch eine andere Anzahl vorgesehen sein) von Schmierstofffördereinheiten 11. Die Schmierstofffördereinheiten sind konkret als Schmierstoffverteiler (Slave-Verteiler) ausgebildet. Jede der Schmierstofffördereinheiten 11 (dies ist im Einzelnen nur für die in Fig. 1 mittlere Schmierstofffördereinheit dargestellt) ist mit Schmierstellen 12 über Endleitungen 13 verbunden.

Die Schmierstofffördereinrichtung 10 umfasst eine Schmierstoffförderpumpe 14 sowie einen Schmierstoffverteiler 15 (Master-Verteiler). Der Master-Verteiler 15 ist mit den Slave-Verteilern 11 über Zwischenförderleitungen 16 verbunden. Im vorliegenden Fall weisen sowohl Master-Verteiler als auch Slave-Verteiler acht Ausgänge auf (dies ist jedoch nicht zwingend, es können auch mehr oder weniger Ausgänge vorgesehen sein). Weiterhin wäre es denkbar, dass zwischen einem der Slave-Verteiler 11 und dem Master-Verteiler 15 ein weiterer Verteiler zwischengeschaltet ist. Die Endleitungen 13 können sich (was jedoch nicht unbedingt sein muss) ggf. verzweigen, beispielsweise wenn größere Systeme bzw. Schmierflächen abgeschmiert werden sollen (wie beispielsweise die Sattelkupplung eines Zugfahrzeuges). Insofern ist es auch möglich (was ebenfalls nicht zwingend ist), dass in den Endleitungen 13 nochmals Verteiler, wie beispielsweise Progressiv-Verteiler angeordnet sind. Im einfachsten Fall handelt es sich jedoch bei den Endleitungen 13 um nicht-verzweigte Leitungen, in die kein weiterer Verteiler mehr eingebracht ist.

Weiterhin ist eine Eingabeeinheit 17 vorgesehen, die mit den Slave-Verteilern 11 und ggf. auch den Master-Verteiler 15 kommunizieren kann (drahtlos oder drahtgebunden, beispielsweise über das Internet, über ein WLAN über Bluetooth oder ein sonstiges Netzwerk). Über die Eingabeeinheit 17 kann dann für jeden Ausgang der Slave-Verteiler die gewünschte Schmierstoffmenge (beispielsweise in cm³/h oder cm³/Tag oder cm³/Woche) eingestellt werden.

Jeder Slave-Verteiler 11 berechnet dann aus den gewünschten Schmierstoffmengen für die Schmierstellen 12 und dem (bekannten) Volumenstrom der Pumpe eine Öffnungszeit für jeden Ausgang. Der Volumenstrom der Pumpe kann bereits in den Slave-Verteilern hinterlegt sein oder beispielsweise über die Eingabeeinheit 17 eingegeben werden (und dann ggf. in den Slave-Verteilern zwischengespeichert werden). Die Summe aller Öffnungszeiten der Ausgänge jedes der Slave-Verteiler wird gemäß den durchgezogenen Pfeilen 18 an den Master-Verteiler 15 übermittelt. Dieser Master-Verteiler bildet dann eine Summe aus den ihm übermittelten Summen von den Slave-Verteilern 11 und übermittelt diese Summe gemäß dem durchgezogenen Pfeil 19 an die Förderpumpe 14.

Die Förderpumpe 14 fördert nun für eine Zeitdauer, die der vom Master-Verteiler vorgegebenen Summe entspricht, Schmierstoff vom Master-Verteiler entlang des gestrichelten Pfeils 20. Der Master-Verteiler fördert dann gemäß den von den Slave-Verteilern 11 vorgegebenen Summen entsprechend lange Schmierstoff an die jeweiligen Slave-Verteiler 11, was durch die gestrichelten Pfeile 21 ausgedrückt ist.

Ein "Zyklus" der Schmierung wird durch Beginn und Ende der Schmierstoffförderung der Schmierstoffförderpumpe 14, währenddessen ggf. sämtliche Schmierstellen, die zu schmieren sind, geschmiert werden, definiert. Gegebenenfalls kann ein "Zyklus" auch durch das Erreichen einer Soll-Abgabemenge definiert werden, der ggf. durch Sensormittel an den Schmierstellen bestimmt wird. Zu Beginn eines "Zyklus" ist jeder Master- und Slave-Verteiler in einer festgelegten Ausgangsposition, die immer wieder (zu Beginn eines Zyklus) eingenommen wird. Dadurch können bei Förderung des Schmierstoffs durch die Schmierstoffförderpumpe sukzessive die Schmierstellen 12 geschmiert werden. Dabei wird zu einem beliebigen Zeitpunkt immer genau ein Ausgang eines Slave-Verteilers mit Schmierstoff beaufschlagt. Vorzugsweise kontinuierlich wird dann ein Ausgang nach dem anderen beaufschlagt, bis sämtliche Ausgänge, die mit zu schmierenden Schmierstellen verbunden sind, beaufschlagt worden sind und zwar gemäß der Vorgabe durch die Eingabeeinheit 17.

Die Verteiler 11, 15 sind so ausgebildet, dass die jeweiligen Ausgänge verschieden lang mit Schmierstoff beaufschlagt werden können. Beispielsweise kann es sich hier um Sektionalventile bzw. -verteiler handeln.

Im Ergebnis wird die Pumpenlaufzeit durch die Summe aller Öffnungszeiten aller Ausgänge sämtlicher Slave-Verteiler bestimmt. Die Vorgabe erfolgt hierbei durch die Eingabeeinheit 17 über die Slave-Verteiler 11. Dadurch wird eine besonders einfache und intuitiv verständliche Regelung der Schmierstoffausgabe ermöglicht.

Die Eingabeeinheit 17 kann beispielsweise ein separates Gerät (Steuergerät) sein oder durch ein mobiles Endgerät, wie beispielsweise ein Smartphone, ein Tablet oder ein Laptop mit entsprechend hinterlegter Software, sein.

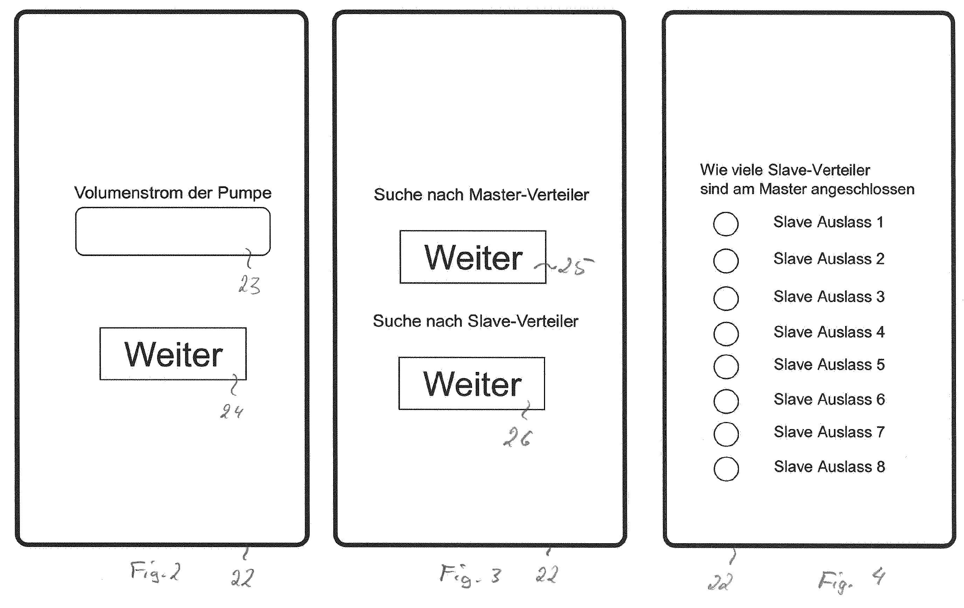

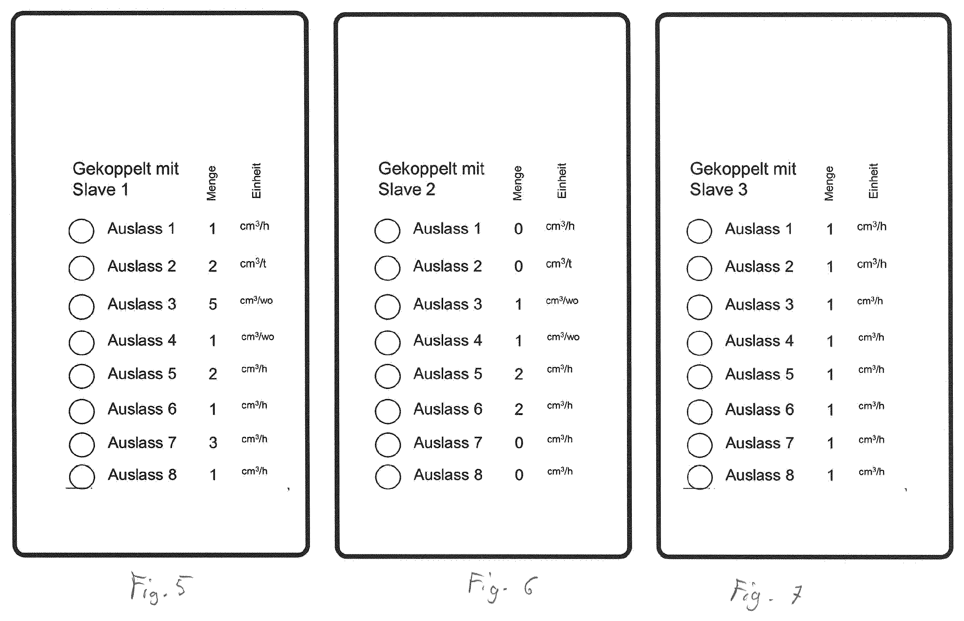

In den Fig. 2-8 ist ein Smartphone 22 mit verschiedenen Bildschirmansichten gezeigt. Gemäß Fig. 2 kann zunächst (in einem ersten Schritt) in das Feld 23 der Volumenstrom der Förderpumpe 14 eingegeben werden (dieser Schritt kann auch entfallen, wenn der Volumenstrom der Pumpe den Slave-Verteilern 11 bereits bekannt ist). Nach der Eingabe des Volumenstroms kann auf "Weiter" im Feld 24 gedrückt werden. Daraufhin erscheint der Bildschirm gemäß Fig. 3. Dort kann dann nach einem Master-Verteiler oder einem Slave-Verteile gesucht werden. Wird ein Master-Verteiler oder Slave-Verteiler gefunden, kann dieser mit dem Smartphone 22 gekoppelt werden. Wird das Feld 25 in Fig. 3 betätigt, kann in einem nächsten Schritt angezeigt werden, welche bzw. wie viele Slave-Verteiler an dem Master-Verteiler angeschlossen sind. Wird das Feld 26 betätigt (und zwar für einen bestimmten Slave-Verteiler), wird ein Bildschirm gemäß Fig. 5, 6 oder 7 (je nach ausgewähltem Slave-Verteiler) angezeigt. Weiterhin werden dann für den jeweiligen Slave-Verteiler (in Fig. 5: Slave 1) die Auslässe angezeigt sowie die Einstellung der gewünschten Schmierstoffmenge. In Fig. 5 ist beispielsweise für den "Auslass 1" eine Schmierstoffmenge von 1 cm³/h eingestellt. Will der Nutzer des Schmierstoffverteilsystems nun diese Menge ändern, kann er einfach auf das entsprechende Feld bei der Mengenangabe "1" drücken und die Menge dann entsprechend ändern (beispielsweise auf "2"). Analog kann auch die Einheit beispielsweise von "cm³/h" in "cm³/t" geändert werden (oder, bei bekannter Dichte, in Gewicht pro Zeiteinheit, also beispielsweise g/h). Hierbei steht "h" für Stunde; "t" Tag; und "wo" für Woche. Ein analoger Bildschirm ist in Fig. 6 für den Slave-Verteiler "Slave 2" und in Fig. 7 für den Slave-Verteiler "Slave 3" gezeigt.

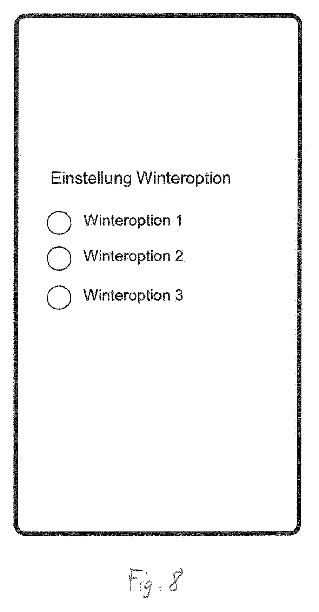

In Fig. 8 ist noch eine weitere Funktion der entsprechenden App des Smartphones 20 gezeigt, nämlich die Möglichkeit zur Einstellung einer Korrekturfunktion. Konkret kann hier "Winteroption 1", "Winteroption 2" oder "Winteroption 3" angewählt werden. Dadurch kann ein "Zeitaufschlag" erfolgen, der daraus resultiert, dass bei besonders niedrigen Temperaturen und einer damit verbundenen erhöhten Viskosität des Schmierstoffes ggf. weniger Schmierstoff gefördert wird als eigentlich zu erwarten ist bzw. vorgegeben ist. Beispielsweise (andere Werte sind möglich) könnte gemäß "Winteroption 1", die in einem Temperaturbereich von 0 bis 5 °C gewählt werden könnte, ein Zeitaufschlag von 10 % erfolgen. Gemäß "Winteroption 2", die bei einem Temperaturbereich von 0 bis -10 °C gewählt werden könnte, könnte ein Zeitaufschlag von 15 % erfolgen. Bei "Winteroption 3", die beispielsweise bei einem Temperaturbereich von -10 °C bis -20 °C gewählt werden könnte, kann ein Zeitaufschlag von 25 % erfolgen.

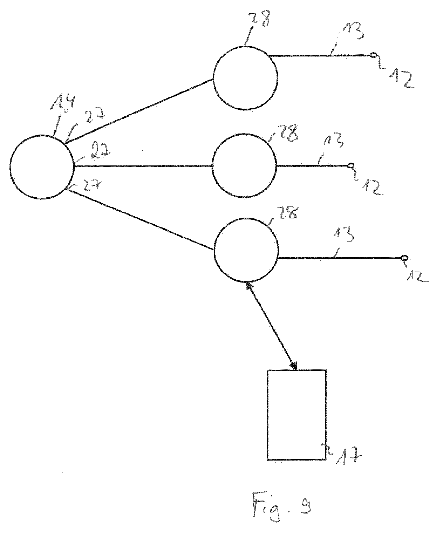

In Fig. 9 ist eine weitere Ausführungsform des Schmierstoffverteilsystems gezeigt. Hier wird über eine Förderpumpe 14, die entweder einen integrierten Verteiler aufweisen kann oder aus einzelnen Pumpeneinheiten aufgebaut sein kann, über Ausgänge 27 der Förderpumpe 14 und daran angeschlossenen Leitungen Schmierstoff an Förderpumpen 28 (Booster-Pumpen) gefördert. Anstelle einer Förderpumpe 14 mit integriertem Verteiler oder einzelnen Pumpeneinheiten kann auch eine Schmierstofffördereinrichtung 10, wie in Fig. 1 dargestellt, zum Einsatz kommen (also eine Schmierstofffördereinrichtung umfassend einen Schmierstoffverteiler bzw. Master-Verteiler). Die Förderpumpen 28 sind wiederum über Endleitungen 13 mit Schmierstellen 12 verbunden. Weiterhin ist auch hier eine Eingabeeinheit 17 vorgesehen, die mit den Förderpumpen 28 kommunizieren kann (konkret ist dies nur für die in Fig. 9 unterste Förderpumpe 28 durch einen entsprechenden Pfeil dargestellt). Auch in der Ausführungsform gemäß Fig. 9 wird über die Eingabeeinheit 17 eine gewünschte Schmierstoffmenge an die Förderpumpen 28 übermittelt, die dann entsprechend die Schmierstellen 12 versorgen. Konkret werden die Förderpumpen 28 in einem "Zyklus" durch die Förderpumpe 14 mit Schmierstoff befüllt und fördern dann entsprechend der Vorgabe durch die Eingabeeinheit 17 den Schmierstoff an die Schmierstellen 12. Auch hier ist also die geförderte Schmierstoffmenge bzw. die an die Schmierstellen 12 ausgebrachte Schmierstoffmenge durch Kommunikation mit der jeweiligen Förderpumpe 28 (die eine Schmierstofffördereinheit definiert), gewährleistet. Eine intuitive und einfache Einstellung des Schmierstoffverteilsystems ist damit ermöglicht.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- 10: Schmierstofffördereinrichtung
- 11: Schmierstofffördereinheit (Slave-Verteiler)
- 12: Schmierstelle
- 13: Endleitung
- 14: Förderpumpe
- 15: Schmierstoffverteiler (Master-Verteiler)
- 16: Zwischenförderleitung
- 17: Eingabeeinheit
- 18: Pfeil
- 19: Pfeil
- 20: Pfeil
- 21: Pfeil
- 22: Smartphone
- 23: Feld
- 24: Feld
- 25: Feld
- 26: Feld
- 27: Ausgang
- 28: Förderpumpe

## Patentansprüche

1. Schmierstoffverteilsystem (12) zum Verteilen von Schmierstoff auf eine Vielzahl von Schmierstellen, umfassend eine Vielzahl von Schmierstofffördereinheiten (11, 25) und eine Vielzahl von Endleitungen (13), die die Schmierstofffördereinheiten (11, 25) mit den Schmierstellen (12) verbinden, eine zentrale Schmierstofffördereinrichtung (10) und eine Vielzahl von Zwischenförderleitungen (16), die die zentrale Schmierstofffördereinrichtung (10) mit der Vielzahl von Schmierstofffördereinheiten (11, 25) verbinden, wobei die Schmierstofffördereinheiten (11, 25) jeweils einen Dateneingang aufweisen, zur Aufnahme von Daten über eine gewünschte Schmierstofffördermenge an die jeweilige angeschlossene Schmierstelle oder die jeweiligen angeschlossenen Schmierstellen (12), wobei das Schmierstoffverteilsystem so konfiguriert ist, dass es entsprechend der Daten eine Schmierstoffabgabe an die jeweilige angeschlossene Schmierstelle oder die jeweiligen angeschlossenen Schmierstellen bewirkt.

2. Schmierstoffverteilsystem nach Anspruch 1,
**dadurch gekennzeichnet, dass**
die Schmierstofffördereinheiten (11, 25) jeweils einen Datenausgang aufweisen, über den die benötigte Schmierstoffmenge an einen Dateneingang der zentralen Schmierstofffördereinrichtung (10) übermittelt werden kann.

3. Schmierstoffverteilsystem nach Anspruch 1 oder 2,
**dadurch gekennzeichnet, dass**
mindestens eine der Schmierstofffördereinheiten (11), insbesondere alle Schmierstofffördereinheiten, als Schmierstoffverteiler ausgebildet ist/sind.

4. Schmierstoffverteilsystem nach einem der vorhergehenden Ansprüche, **dadurch gekennzeichnet, dass**
die zentrale Schmierstofffördereinrichtung (10) umfasst: Eine Förderpumpe (14) zum Fördern des Schmierstoffes und/oder einen Master-Verteiler (15), der an die Förderpumpe (14) angeschlossen ist oder in diese integriert ist.

5. Schmierstoffverteilsystem nach einem der vorhergehenden Ansprüche, insbesondere nach Anspruch 4,
**dadurch gekennzeichnet, dass**
mindestens eine der Schmierstofffördereinheiten (11), insbesondere alle Schmierstofffördereinheiten (11), als Slave-Verteiler, der/die an den Master-Verteiler angeschlossen ist/sind, ausgebildet ist/sind und jeweils aufweisen: mehrere Schmierstoffausgänge zum Anschluss an entsprechende Schmierstellen (12) sowie einen Dateneingang zur Aufnahme von Daten über ein gewünschte Schmierstofffördermenge an die jeweilige angeschlossene Schmierstelle (12).

6. Schmierstoffverteilsystem nach einem der vorhergehenden Ansprüche, insbesondere nach Anspruch 4 oder 5,
**dadurch gekennzeichnet, dass**
der Master-Verteiler (15) einen Datenausgang aufweist, über den die von dem Master-Verteiler (15) benötigte Schmierstoffmenge an einen Dateneingang der Förderpumpe (14) übermittelt werden kann.

7. Schmierstoffverteilsystem nach einem der vorhergehenden Ansprüche, insbesondere nach Anspruch 5 oder 6,
**dadurch gekennzeichnet, dass**
mindestens einer der Slave-Verteiler (11), insbesondere alle Slave-Verteiler (11), konfiguriert ist/sind, bei vorgegebener Fördermenge der zentralen Förderpumpe eine Förderzeit für jede Schmierstelle zu bestimmen und eine Summe der Förderzeiten der an dem jeweiligen Slave-Verteiler (11) angeschlossenen Schmierstellen (11) an den Master-Verteiler (15) zu übermitteln, wobei der Master-Verteiler (15) vorzugsweise konfiguriert ist, um eine Summe der von den Slave-Verteilern (11) übermittelten aufsummierten Förderzeiten an die Förderpumpe (14) zu übermitteln.

8. Schmierstoffverteilsystem nach einem der vorhergehenden Ansprüche,
**dadurch gekennzeichnet, dass**
mindestens eine der Schmierstofffördereinheiten (25), insbesondere alle Schmierstofffördereinheiten (25), als dezentrale Förderpumpen ausgebildet ist/sind.

9. Schmierstoffverteilsystem nach einem der vorhergehenden Ansprüche, insbesondere nach Anspruch 8,
**dadurch gekennzeichnet, dass**
die dezentralen Förderpumpen (25), insbesondere zyklisch, durch die zentrale Fördereinrichtung (10) befüllbar sind und die gewünschte Schmierstoffmenge an die jeweilige Schmierstelle (12) ausgeben.

10. Schmierstoffverteilsystem nach einem der vorhergehenden Ansprüche, **gekennzeichnet durch,**
mindestens eine, insbesondere mobile, Eingabeeinheit (17), vorzugsweise ein mobiles Endgerät, wie z.B. ein Smartphone (22), die/das konfiguriert ist, so dass die gewünschte Schmierstoffmenge für jede Schmierstelle (12) über die Eingabeeinheit (17) eingegeben werden kann,
wobei die Eingabeeinheit (17) vorzugsweise drahtlos oder drahtgebunden mit mindestens einer, vorzugsweise jeder, Schmierstofffördereinheit (11) verbindbar ist und/oder mindestens eine, vorzugsweise alle, Schmierstofffördereinheiten (11), eine integrierte Eingabeeinheit aufweisen, wobei die Eingabeeinheit vorzugsweise so konfiguriert ist, dass eine Fördermenge der Pumpe und/oder eine Betriebsbedingung, wie beispielsweise eine Temperatur oder ein Temperaturbereich, eingegeben werden kann.

11. Schmierstoffverteilverfahren zum Verteilen von Schmierstoff auf eine Vielzahl von Schmierstellen (12), insbesondere unter Verwendung des Schmierstoffverteilsystems nach einem der vorangehenden Ansprüche, wobei eine zentrale Schmierstofffördereinrichtung (10) Schmierstoff an eine Vielzahl von Schmierstofffördereinheiten (11, 25) fördert, wobei jede Schmierstofffördereinheit über mindestens eine Endleitung (13) Schmierstoff an mindestens eine Schmierstelle (12) fördert, wobei eine jeweils gewünschte Schmierstoffmenge in eine Eingabeeinheit (17) eingegeben wird, wobei die Eingabeeinheit (17) in Verbindung mit der jeweiligen Schmierstofffördereinheit (11, 25) steht oder in diese integriert ist, wobei Schmierstoff entsprechend der vorgegebenen Schmierstoffmenge an die jeweilige Schmierstelle (12) ausgegeben wird.

12. Schmierstoffverteilverfahren nach Anspruch 11,
**dadurch gekennzeichnet, dass**
mindestens eine Schmierstofffördereinheit (11), insbesondere alle Schmierstofffördereinheiten (11) als ein Schmierstoffverteiler, insbesondere Slave-Verteiler ausgebildet ist/sind und/oder
mindestens eine Schmierstofffördereinheit (25), insbesondere alle Schmierstofffördereinheiten (25) als eine dezentrale Förderpumpe ausgebildet ist/sind und/oder
die zentrale Schmierstofffördereinrichtung eine Förderpumpe und/oder einen Verteiler, insbesondere Master-Verteiler umfasst.

13. Schmierstoffverteilverfahren nach 12,
**dadurch gekennzeichnet, dass**
mindestens eine der Schmierstofffördereinheiten, insbesondere Slave-Verteiler, vorzugsweise alle Schmierstofffördereinheiten, insbesondere alle Slave-Verteiler, bei vorgegebener Fördermenge der zentralen Förderpumpe eine Förderzeit für jede Schmierstelle bestimmt/bestimmen und
eine Summe der Förderzeiten der an die jeweilige Schmierstofffördereinheit, insbesondere Slave-Verteiler angeschlossenen Schmierstellen (12) an die Schmierstofffördereinrichtung (10), insbesondere den Master-Verteiler übermittelt wird, wobei der Master-Verteiler vorzugsweise eine Summe der von den Slave-Verteilern übermittelten aufsummierten Förderzeiten an die Förderpumpe übermittelt.

14. Schmierstoffverteilverfahren nach 13,
**dadurch gekennzeichnet, dass**
eine Fördermenge der Förderpumpe (14) und/oder eine Betriebsbedingung, wie beispielsweise eine Temperatur oder ein Temperaturbereich, in die Eingabeeinheit (17) eingegeben oder selbst ermittelt wird, und vorzugsweise damit eine Korrektur vorgenommen wird.

15. Schmierstoffverteilverfahren nach einem der Ansprüche 11 bis 14,
**dadurch gekennzeichnet, dass**
von der Schmierstelle eine Bedarfsmeldung erfolgt und eine Zuteilung von Schmierstoff abhängig von dieser Bedarfsmeldung erfolgt und/oder die an der Schmierstelle ausgegebene Schmierstoffmenge gemessen wird.
